(19) Europäisches Patentamt
European Patent Office
Office européen des brevets

(11) **EP 4 245 137 A1**

(12) **EUROPEAN PATENT APPLICATION**

(43) Date of publication:
**20.09.2023 Bulletin 2023/38**

(51) International Patent Classification (IPC):
**A01M 21/04** (2006.01) **A01M 7/00** (2006.01)

(21) Application number: **23158694.2**

(52) Cooperative Patent Classification (CPC):
**A01M 21/04; A01M 7/0089**

(22) Date of filing: **27.02.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022 US 202263269609 P**

(71) Applicant: **Agco Corporation
Duluth, Georgia 30096 (US)**

(72) Inventors:
- **ZIMMERMAN, Jeffrey Michael
Hesston, 67062 (US)**
- **LEE, Jason
Hesston, 67062 (US)**

(74) Representative: **AGCO Intellectual Property
Department
AGCO Limited
Abbey Park Stoneleigh
Kenilworth CV8 2TQ (GB)**

(54) **SYSTEMS AND METHODS FOR APPLYING HERBICIDE TO AGRICULTURAL FIELDS**

(57) A system (202) for applying an herbicide to an agricultural field includes a sensor (114) configured to measure total vegetation density in the agricultural field; and an applicator vehicle (102, 302) comprising a chassis (104), a liquid holding tank (110) carried by the chassis, and at least one nozzle (204) carried by the chassis and in fluid communication with the liquid holding tank. A controller (116) is configured to control an amount of flow of herbicide through the nozzle(s) (204) based on the total vegetation density measured by the sensor. A method of applying an herbicide to an agricultural field includes measuring a total vegetation density in the agricultural field and spraying a variable amount of an herbicide through at least one nozzle onto the agricultural field. The amount of herbicide is based on the measured total vegetation density, without regard to distinction between crop and weed.

**FIG. 1**

EP 4 245 137 A1

Description

FIELD

Embodiments of the present disclosure relate to mobile application machines, such as self-propelled sprayers and similar vehicles. More particularly, embodiments relate to mobile machines for applying herbicide.

BACKGROUND

High crop yields of modern agribusiness may require application of fertilizers, pesticides, and/or herbicides. Dispersing these chemicals onto high-acreage fields requires specialized machines mounted on or towed by a vehicle. An example of such a machine is the self-propelled sprayer.

A common design for a self-propelled crop sprayer includes a chassis with a tank, boom arms, and nozzles connected to the boom arms. The tank contains liquid product such as fertilizers, pesticides, and/or herbicides. Boom arms extend outward from the sides of the chassis. Boom plumbing contains supply lines and nozzles spaced apart along the length of the boom arms at a spacing distance corresponding to the spray pattern of the nozzles. In operation, as the crop sprayer crosses the field, liquid is pumped from the tank through the supply lines along the boom arms, and out through the nozzles. This allows the self-propelled sprayer to distribute the liquid along a relatively wide swath. The length of conventional boom arms may vary from, for example, 6 meters (18 feet) up to 46 meters (150 feet), but shorter or longer booms are possible. The boom arms typically swing in for on-road transport and out for field-spraying operations.

Current herbicide labels prescribe the application rate of the active ingredient and the water (which acts as a carrier for the active ingredient). These labels define the maximum and minimum of both carrier and active ingredient with a bias towards a higher rate to maintain weed control in all conditions. The prescribed application rate has a built-in factor of safety to minimize weed control complaints and need for respray. When conditions are perfect, the applicator is typically over-applying the herbicide. It would be beneficial to reduce herbicide usage while maintaining weed control in different field conditions because reducing herbicide usage can decrease material and labor costs, while increasing the area of the field that can be treated before refilling the herbicide tank. It may also benefit overall weed control to increase the herbicide application rate in extremely difficult conditions, for example, in field areas having large and difficult-to-kill weeds.

BRIEF SUMMARY

A system for applying an herbicide to an agricultural field includes a sensor configured to measure total vegetation density in the agricultural field; and an applicator vehicle comprising a chassis, a liquid holding tank carried by the chassis, and at least one nozzle carried by the chassis and in fluid communication with the liquid holding tank. A controller is configured to control an amount of flow of herbicide through the at least one nozzle based on the total vegetation density measured by the sensor.

The sensor may be carried by another vehicle separate from the applicator vehicle, such as a drone, airplane, or satellite, or may be carried by the chassis of the applicator vehicle.

The sensor may include, for example, a camera (e.g., a hyperspectral, multispectral, RGB, or monochrome camera) or a reflectance detector. The sensor may be configured to detect a preselected wavelength of light.

A method of applying an herbicide to an agricultural field includes measuring a total vegetation density in the agricultural field and spraying a variable amount of an herbicide through at least one nozzle onto the agricultural field. The amount of herbicide is based on the measured total vegetation density.

The total vegetation density may be measured, for example, with a dronemounted camera, or with a sensor mounted on a vehicle carrying the at least one nozzle. The total vegetation density may include the total density of crop plus weeds, percentage of soil covered, crop width, crop leaf area, or other parameters.

The amount of the herbicide is varied within a preselected range, and may increase with increasing total vegetation density.

Other technical features may be readily apparent to one skilled in the art from the following figures, description, and claims.

BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:

FIG. 1 illustrates an agricultural vehicle in the form of a self-propelled crop sprayer;
FIG. 2 illustrates a portion of the agricultural vehicle of FIG. 1 including a boom and part of an application system; and
FIG. 3 is a simplified side view of another agricultural vehicle and an associated drone in an agricultural field.

DETAILED DESCRIPTION

The illustrations presented herein are not actual views of any agricultural sprayer or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

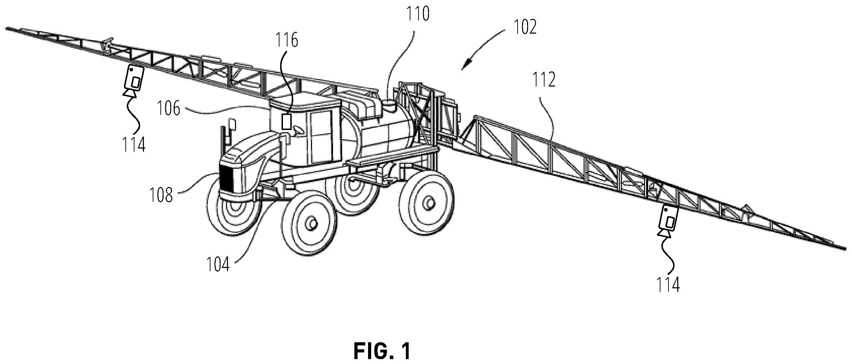

FIG. 1 shows a crop sprayer 102 used to deliver chemicals, such as an herbicide, to crops in an agricultural field. The crop sprayer 102 includes a chassis 104 and an operator cab 106 mounted on the chassis 104. The operator cab 106 may house controls for the crop sprayer 102. An engine 108 may be mounted on a forward portion of chassis 104 in front of the operator cab 106 or may be mounted on a rearward portion of the chassis 104 behind the operator cab 106. The engine 108 may be commercially available from a variety of sources and may include, for example, a diesel engine or a gasoline powered internal combustion engine, a battery-powered electric motor, *etc.* The engine 108 provides energy to propel the crop sprayer 102 through a field on wheels or tracks, and may also provide energy to spray liquids from the crop sprayer 102.

The crop sprayer 102 further includes a product tank 110 to store a liquid to be sprayed on the field. The liquid may include chemicals, such as but not limited to, herbicides, pesticides, and/or fertilizers. The product tank 110 may be mounted on the chassis 104, either in front of or behind the operator cab 106. The crop sprayer 102 may include more than one product tank 110 to store different chemicals to be sprayed on the field. The stored chemicals may be dispersed by the crop sprayer 102 one at a time, or different chemicals may be mixed and dispersed together in a variety of mixtures.

A boom 112 on the crop sprayer 102 is used to distribute the liquid from the product tank 110 over a wide swath as the crop sprayer 102 is driven through the field. The boom 112 may include two or more portions that can fold for transport on public roadways, and unfold (i.e., to the position shown in FIG. 1) for field operations.

The boom 112 may carry one or more sensors 114 to detect the total vegetation density of the agricultural field. The term "total vegetation density" as used herein includes any parameter or model representing the total plant volume or mass within an area, and can be computed based on crop leaf area, percent of soil covered, crop height, plant mass, plant width, NDVI (normalized difference vegetation index), NDRE (normalized difference red edge index), TGI (triangular greenness index), or other crop indices.

In some embodiments, the sensors 114 may include one or more cameras (*e.g.,* hyperspectral cameras, multispectral cameras, RGB cameras, monochrome cameras, *etc.*) or reflectance detectors. For example, the sensors 114 may capture images of the agricultural field, and the images may be analyzed to identify vegetation. In other embodiments, the sensors 114 may detect one or more preselected wavelengths of light, and may infer the presence or amount of vegetation based on the detected light. Sensors 114 may, in some embodiments, transmit and detect an electromagnetic signal. In other embodiments, sensors 114 may be passive, relying on detection of reflected sunlight. Sensing of vegetation is described, for example, in U.S. Patent 9,417,120, "Device and Methods for Quantifying Plants Using an Active Light Sensor for Scanning Plants in a Defined Area," granted August 16, 2016; U.S. Patent 10,912,249, "Prediction of Amount of Crop or Product Remaining for Field," granted February 9, 2021; U.S. Patent 9,582,873, "Active Imaging Systems for Plant Growth Monitoring," granted February 28, 2017; and U.S. Patent 10,402,942, "Multiple Georeferenced Aerial Image Crop Analysis and Synthesis," granted September 9, 2019.

The crop sprayer 102 may include a controller 116 in communication with the sensors 114 and configured to control operations of the crop sprayer 102. For example, the controller 116 may be entirely or partially located within the operator cab 106. The controller 116 may include a user interface (*e.g.*, a keyboard, a joystick, a display, a touchscreen, *etc.*) to enable a user to interact with and direct the controller 116 to control the crop sprayer 102.

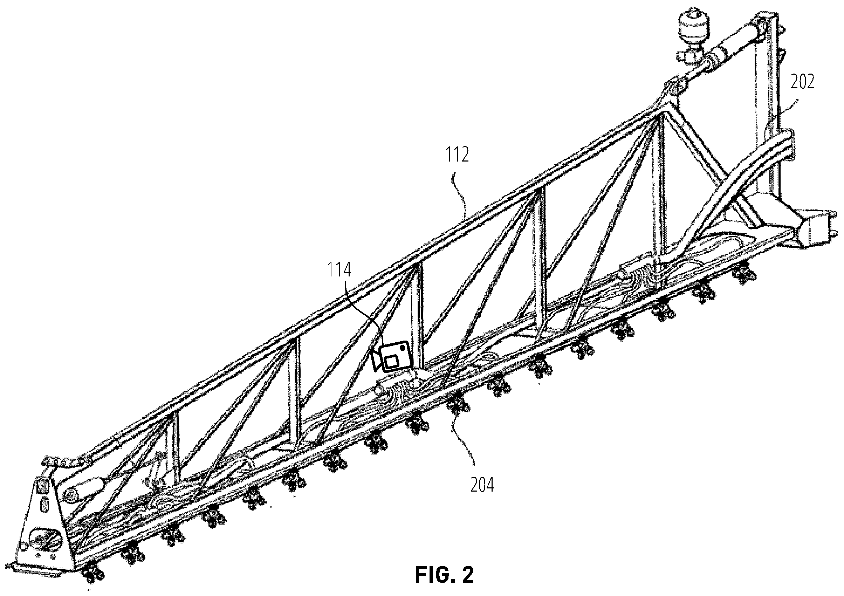

FIG. 2 is a simplified perspective view of a portion of the boom 112. Liquid is conveyed from the product tank 110 (FIG. 1) by a liquid distribution system 202 to various spray nozzles 204 spaced along the boom 112. The liquid distribution system 202, which may be mounted on the boom 112, includes at least one supply line and may optionally include a recirculation line connected to the product tank 110.

In use, the sensors 114 measure the total vegetation density in the agricultural field. The total vegetation density is used to determine an amount of herbicide to spray on the agricultural field, which can vary throughout the agricultural field. Where the total vegetation density (*i.e.*, the sum of the density of crop plus weeds) is relatively higher than other areas, the application rate of herbicide is set higher. Where vegetation density is relatively lower than other areas, the application rate of herbicide is lower.

By varying the amount of herbicide based on total vegetation density (not just weed density), the herbicide coverage may be more even than a constant herbicide prescription. In particular, it has been observed that in areas of more dense crop growth, a larger fraction of the applied herbicide lands on the leaves of the crop, rather than on the weeds. Inasmuch as the herbicide is selective for the weeds, and does not harm the crop, applying herbicide in proportion to the total vegetation density can help to ensure that the weeds are covered uniformly. Thus, a weed in an area of low total vegetation density may have approximately the same amount of herbicide applied to it as a similarly sized weed in an area of high total vegetation density, even though the crop and other weeds in the latter area intercept some of the herbicide.

There is a relationship between total vegetation density and droplets intercepted by the vegetation. In a high-density canopy (*i.e.*, combination of crop plus weed in a field), any individual leaf has a lower chance of receiving applied herbicide than in a low-density canopy, because other leaves may intercept the herbicide first. The higher the total vegetation density, the less herbicide each individual leaf will receive, on average. The amount of herbicide received by weeds can be expressed as follows:

$$D_w = D_t - D_c - D_s,$$

where $D_w$ is the number of droplets that land on weed leaves, $D_t$ is the total number of droplets, $D_c$ is the number of droplets that land on crop leaves, and $D_s$ is the number of droplets that land on soil. The weeds, being above the soil, receive droplets before the soil does, and so that term is typically ignored. Thus, the amount reaching weeds is dependent on the total herbicide and the amount applied to (or intercepted by) the crop.

With increased total vegetation density (due to increased crop growth), there is an increase in the droplets that land on crop leaves. If the total number of droplets remains constant, then the number of droplets on weed leaves decreases, and may not be sufficient for effective weed control. Increasing the total herbicide applied when total vegetation density increases can help ensure that the amount applied to weed leaves remains high enough for effective weed control.

The herbicide is applied within a preselected range considering environmental, operational, and other limits. For example, if the herbicide manufacturer recommends between 140 l/ha and 234 l/ha for a certain type of crop, the crop sprayer 102 may be set to spray between 159 l/ha in areas of low total vegetation density and 206 l/ha in areas of higher total vegetation density. Operating ranges may be selected based on the type of herbicide, the crop type, weed type, local regulations, material cost, *etc.* By varying the amount of herbicide to match the total vegetation density, the total herbicide used may be decreased for the same overall effectiveness at weed control. That is, to control weeds at least to a specified degree throughout the agricultural field, matching the herbicide amount to the local total vegetation density may require less total herbicide because the required amount of herbicide for the higher-density areas is more than required for the lower-density areas. Using less herbicide may have such benefits as lower material and labor costs, lower environmental impact, and a lower tendency to foster herbicide-resistant weeds.

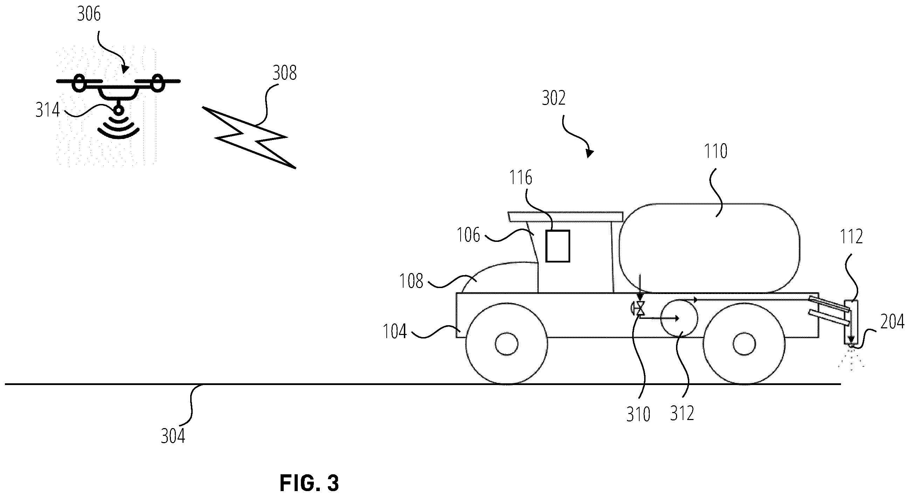

FIG. 3 is a simplified side view of crop sprayer 302 operating in an agricultural field 304. The crop sprayer 302 is similar to the crop sprayer 102 shown in FIG. 1 and FIG. 2, but does not include the sensors 114 on the crop sprayer 302 itself. Instead, one or more additional vehicles, such as a drone 306, carries a sensor 314 in the field, and transmits information from the sensor(s) to the crop sprayer 302 via a communication link 308. The drone(s) 306 or other vehicle(s) can monitor field conditions at a distance from the crop sprayer 302, and therefore, the controller 116 can adjust flow from the product tank 110 via a control valve 310 and pump 312 to the spray nozzles 204. The drone(s) 306 or other vehicle(s) may alternatively detect total vegetation density in the agricultural field at an earlier time (*e.g.*, earlier in the day, a previous day, *etc.*), and the data may be used to form a prescription map for the agricultural field by another computer system (*e.g.*, in a farm office, in a cloud-based computer, in a tablet computer, *etc.*). Thus, the communication link 308 need not be direct from the drone(s) 306 or other vehicle(s) to the crop sprayer 302.

Other types of applicator vehicles may also be used. For example, an autonomous vehicle may be equipped with a product tank and nozzle on a chassis (*e.g.*, without an operator cab), and the vehicle may include a sensor or a communication link to receive total vegetation density data from another source. Autonomous vehicles may have advantages such as that they can be relatively smaller, and can operate around-the-clock with minimal supervision. Furthermore, if the sensors are not carried by the applicator vehicle, the sensors can be aerial (*e.g.,* on a flying drone 306 (FIG. 3), an airplane, a satellite, *etc.*) or ground-based (*e.g.,* on a ground-based drone, a tractor, a fixed tower, *etc.*).

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various vehicle types and configurations.

**Claims**

1.  A system (202) for applying an herbicide to an agricultural field, the system comprising:

    a sensor (114) configured to measure total vegetation density in the agricultural field;
    an applicator vehicle (102, 302) comprising a chassis (104), a liquid holding tank (110) carried by the chassis, and at least one nozzle (204) carried by the chassis and in fluid communication with the liquid holding tank; and
    a controller (116) configured to control an amount of flow of herbicide through the at least one nozzle based on the total vegetation density measured by the sensor.

2.  The system of claim 1, wherein the sensor is carried by another vehicle (306) separate from the applicator vehicle.

3.  The system of claim 2, wherein the another vehicle comprises a drone or a satellite.

4.  The system of claim 1, wherein the sensor is carried by the chassis of the applicator vehicle.

5.  The system of any of claim 1 through 4, wherein the sensor comprises a camera.

6.  The system of claim 5, wherein the camera is selected from the group consisting of a hyperspectral camera, a multispectral camera, an RGB camera, and a monochrome camera.

7.  The system of any of claim 1 through 4, wherein the sensor comprises a reflectance detector.

8.  The system of claim 7, wherein the sensor is configured to detect a preselected wavelength of light.

9.  A method of applying an herbicide to an agricultural field, the method comprising:

    measuring a total vegetation density in the agricultural field using the system of any one of claim 1 through 8;
    spraying a variable amount of an herbicide through the at least one nozzle onto the agricultural field, wherein the amount of herbicide is based on the measured total vegetation density.

10. The method of claim 9, wherein the variable amount of herbicide increases with increasing total vegetation density.

11. The method of claim 9 or claim 10, wherein measuring a total vegetation density in the agricultural field comprises measuring a total density of crop plus weeds.

12. The method of any of claim 9 through 11, wherein measuring a total vegetation density in the agricultural field comprises measuring a percentage of soil covered.

13. The method of any of claim 9 through 12, wherein measuring a total vegetation density in the agricultural field comprises measuring a crop width.

14. The method of any of claim 9 through 13, wherein measuring a total vegetation density in the agricultural field comprises measuring a crop leaf area.

15. The method of any of claim 9 through 14, wherein spraying a variable amount of an herbicide through at least one nozzle onto the agricultural field comprises varying the amount of the herbicide within a preselected range.

FIG. 1

FIG. 2

FIG. 3

| | Europäisches Patentamt European Patent Office Office européen des brevets | **EUROPEAN SEARCH REPORT** | Application Number EP 23 15 8694 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 112 514 875 A (ZHANG JINFENG) 19 March 2021 (2021-03-19) * please view detailed citations in the WO * ----- | 10-15 | INV. A01M21/04 A01M7/00 |
| X | CN 113 366 956 A (UNIV CHINA AGRICULTURAL) 10 September 2021 (2021-09-10) | 1,4-9 | |
| Y | * please view detailed citations in the WO * ----- | 2,3, 10-15 | |
| Y | US 2019/150357 A1 (WU DOLLY Y [US] ET AL) 23 May 2019 (2019-05-23) * please view detailed citations in the WO * ----- | 2,3 | |

| | TECHNICAL FIELDS SEARCHED (IPC) |
|---|---|
| | A01M |

The present search report has been drawn up for all claims

| Place of search | Date of completion of the search | Examiner |
|---|---|---|
| Munich | 3 July 2023 | Behammer, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 8694**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-07-2023**

| Patent document cited in search report | Publication date | Patent family member(s) | Publication date |
|---|---|---|---|
| CN 112514875 A | 19-03-2021 | NONE | |
| CN 113366956 A | 10-09-2021 | NONE | |
| US 2019150357 A1 | 23-05-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9417120 B
- US 10912249 B
- US 9582873 B
- US 10402942 B